(19) Europäisches Patentamt / European Patent Office / Office européen des brevets

(11) **EP 3 780 184 B1**

(12) **EUROPEAN PATENT SPECIFICATION**

(45) Date of publication and mention of the grant of the patent:
**26.06.2024 Bulletin 2024/26**

(21) Application number: **18912877.0**

(22) Date of filing: **28.03.2018**

(51) International Patent Classification (IPC):
$H01M\ 4/587^{(2010.01)}$   $H01M\ 4/48^{(2010.01)}$
$H01M\ 4/131^{(2010.01)}$   $H01M\ 4/133^{(2010.01)}$
$H01M\ 4/1391^{(2010.01)}$   $H01M\ 4/1393^{(2010.01)}$
$H01M\ 4/04^{(2006.01)}$   $H01M\ 4/36^{(2006.01)}$
$H01M\ 4/38^{(2006.01)}$   $H01M\ 10/0525^{(2010.01)}$
$H01M\ 4/02^{(2006.01)}$   $H01M\ 4/62^{(2006.01)}$

(52) Cooperative Patent Classification (CPC):
**H01M 4/0471; H01M 4/131; H01M 4/133; H01M 4/1391; H01M 4/1393; H01M 4/364; H01M 4/386; H01M 4/483; H01M 4/587;** H01M 4/366; H01M 4/625; H01M 10/0525; H01M 2004/027; H01M 2220/30; Y02E 60/10

(86) International application number:
**PCT/JP2018/012982**

(87) International publication number:
**WO 2019/186828 (03.10.2019 Gazette 2019/40)**

(54) **NEGATIVE ELECTRODE MATERIAL FOR LITHIUM ION SECONDARY BATTERY, PRODUCTION METHOD FOR NEGATIVE ELECTRODE MATERIAL FOR LITHIUM ION SECONDARY BATTERY, NEGATIVE ELECTRODE MATERIAL SLURRY FOR LITHIUM ION SECONDARY BATTERY, NEGATIVE ELECTRODE FOR LITHIUM ION SECONDARY BATTERY, AND LITHIUM ION SECONDARY BATTERY**

NEGATIVELEKTRODENMATERIAL FÜR LITHIUM-IONEN-SEKUNDÄRBATTERIE, VERFAHREN ZUR HERSTELLUNG DES NEGATIVELEKTRODENMATERIALS FÜR LITHIUM-IONEN-SEKUNDÄRBATTERIE, NEGATIVELEKTRODENMATERIALSCHLÄMME FÜR LITHIUM-IONEN-SEKUNDÄRBATTERIE, NEGATIVELEKTRODE FÜR LITHIUM-IONEN-SEKUNDÄBATTERIE UND LITHIUM-IONEN-SEKUNDÄRBATTERIE

MATÉRIAU D'ÉLECTRODE NÉGATIVE SERVANT À UN ACCUMULATEUR AU LITHIUM-ION, PROCÉDÉ DE PRODUCTION DE MATÉRIAU D'ÉLECTRODE NÉGATIVE SERVANT À UN ACCUMULATEUR AU LITHIUM-ION, ÉLECTRODE NÉGATIVE DESTINÉE À UN ACCUMULATEUR AU LITHIUM-ION AU LITHIUM-ION ET ACCUMULATEUR AU LITHIUM-ION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.02.2021 Bulletin 2021/07**

(73) Proprietor: **Resonac Corporation Tokyo 105-7325 (JP)**

(72) Inventors:
• **TSUCHIYA, Hideyuki** Tokyo 105-8518 (JP)
• **KOMATSU, Naoya** Tokyo 105-8518 (JP)

(74) Representative: **Berggren Oy** P.O. Box 16 **Eteläinen Rautatiekatu 10A 00101 Helsinki (FI)**

(56) References cited:
**WO-A1-2017/002959    JP-A- 2002 083 587**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 780 184 B1

EP 3 780 184 B1

JP-A- 2005 019 399    JP-A- 2009 245 613
JP-A- 2014 067 583    JP-A- 2014 093 145
JP-A- 2015 165 510    JP-A- 2015 170 542

**Description**

[Technical Field]

The invention relates to a negative electrode material for a lithium ion secondary battery, a production method for a negative electrode material for a lithium ion secondary battery, a negative electrode material slurry for a lithium ion secondary battery, a negative electrode for a lithium ion secondary battery, and a lithium ion secondary battery.

There are growing demands for lithium ion secondary batteries with higher capacity as mobile devices such as mobile phones, laptop computers and tablets become increasingly sophisticated. Although mainly graphite is used as a material for a negative electrode of a lithium ion secondary battery, elements that have a higher theoretical capacity than graphite and the ability to store and discharge lithium ions have been intensely investigated as a material for a negative electrode that would achieve a further increase in the capacity of lithium ion secondary batteries. Hereinafter, an element that has a higher theoretical capacity than graphite and the ability to store and discharge lithium ions is also referred to as a specific element, and a substance that includes a specific element is also referred to as a specific elemental body.

Elements such as silicon, tin, lead and aluminum are known as specific elements. Among these, silicon and silicon oxides, which are more advantageous than other specific elemental bodies in terms of their potential for increasing battery capacity, cost and processability, are, in particular, under active development.

It is known that when a specific elemental body forms an alloy during charging, the volume thereof is greatly increased. Excessive expansion of the specific elemental body by charging may cause breakage of the specific elemental body into fine fragments, and even breakage of a negative electrode including the specific elemental body, which would lead to disconnection of electroconductivity. As a result, the capacity of the battery may significantly decrease as the number of cycles increases.

In addition, when a specific elemental body is used in a negative electrode, expansion of the negative electrode during charging may result in expansion of the battery cell. Excessive expansion of the battery cell may create a repulsive force toward electronic components around the battery cell, and may lead to breakdown of the electronic components. Therefore, expansion of the negative electrode is preferably kept as small as possible.

In order to address the problems described above, materials for a negative electrode that can suppress the expansion of a negative electrode during charging, and can provide a lithium ion secondary battery with favorable cycle characteristics, have been proposed.

For example, Patent Document 1 describes a negative electrode material for a lithium ion secondary battery that includes composite particles in which first particles containing carbonaceous substance A and second particles containing silicon atoms are compounded with carbonaceous substance B that is different from carbonaceous substance A, and when a section of the composite particle is observed, the content of silicon atoms, inside a region up to a depth of 1/8 of the length of the short axis from the periphery of the composite particle, is not less than twice as large as the content of silicon atoms, inside a circle where the center is at the midpoint of the long axis of the composite particle and the radius is 1/8 of the length of the short axis of the composite particle. The long axis of the composite particle refers to an axis with the maximum diameter of the composite particle, and the short axis of the composite particle refers to an axis that orthogonally crosses the long axis at the midpoint thereof.

In the composite particles in the negative electrode material for a lithium ion secondary battery described in Patent Document 1, the amount of second particles containing silicon atoms in the vicinity of a surface of the composite particles is greater than the amount thereof inside the composite particles. As a result, expansion of the second particles upon charging mainly occurs in the vicinity of a surface of the composite particle, thereby suppressing excessive expansion of the composite particles.

JP 2015 165510 A discloses a negative electrode material containing composite particles made by compositing first particles containing a carbonaceous material A and second particles containing silicon atoms using a carbonaceous material B different from the carbonaceous material A. A negative electrode for a lithium-ion secondary battery containing the negative electrode material and graphite particles having an average surface spacing (d002) of 0.335 nm to 0.347 nm and a volume average particle diameter of 1 μm to 20 μm as an auxiliary agent is further disclosed.

WO 2017/002959 A1 discloses a negative electrode material that includes silicon-containing particles, artificial graphite particles, and a carbonaceous material. At least a portion of the silicon-containing particles, artificial graphite particles, and carbonaceous material are combined together into composite particles. The silicon-containing particles have a SiOx layer (0 < x≤2) on the particle surface and an oxygen content of 1.0 mass% to 18.0 mass% inclusive, with particles having a primary particle diameter of 200 nm or smaller as the main component thereof. The artificial graphite particles are non-scale-shaped particles and have a D50 particle diameter of 1.0 μm to 15.0 μm inclusive. A lithium-ion battery provided with a negative electrode using the negative electrode material is further disclosed.

[Prior Art Document]

[Patent Document]

Patent Document 1: International Publication No. 2012/077785

[Summary of the Invention]

[Problem to be Solved by the Invention]

Recently, with the growing demands for an increase in the capacity of lithium ion secondary batteries having a negative electrode including a specific elemental body, development of a negative electrode material, which can further suppress expansion of the negative electrode and improve the cycle characteristic, is anticipated.

In view of the foregoing, the disclosure aims to provide a negative electrode material for a lithium ion secondary battery that exhibits an excellent effect of suppressing expansion of the negative electrode during charging and can form a lithium ion secondary battery that exhibits excellent cycle characteristics, and a method of producing the same. The disclosure also aims to provide a negative electrode material slurry for a lithium ion secondary battery, a negative electrode for a lithium ion secondary battery and a lithium ion secondary battery, in which the negative electrode material is used.

[Means for Implementing the Invention]

The invention relates to a negative electrode material according to claim 1.

The invention also relates to a method according to claim 7.

An embodiment relates to a negative electrode material slurry for a lithium ion secondary battery, comprising the negative electrode material for a lithium ion secondary battery as defined above. a binder, and a solvent.

An embodiment relates to a negative electrode for a lithium ion secondary battery, comprising a current collector and a negative electrode layer including the negative electrode material for a lithium ion secondary battery as defined above.

An embodiment relates to a lithium ion secondary battery, comprising a positive electrode, an electrolyte, and the negative electrode as defined above.

[Effect of the Invention]

According to the invention, it is possible to provide a negative electrode material for a lithium ion secondary battery that exhibits an excellent effect of suppressing expansion of the negative electrode during charging and can form a lithium ion secondary battery that exhibits excellent cycle characteristics, and a method of producing the same. Further, it is possible to provide a negative electrode material slurry for a lithium ion secondary battery, a negative electrode for a lithium ion secondary battery and a lithium ion secondary battery, in which the negative electrode material is used.

[Brief Description of the Drawings]

Fig. 1 is a schematic sectional view showing a device for measuring the density after pressing of the negative electrode material.
Fig. 2 is a schematic sectional view showing an exemplary configuration of the second particle.
Fig. 3 is a schematic sectional view showing another exemplary configuration of the second particle.
Fig. 4 is a schematic sectional view showing another exemplary configuration of the second particle.
Fig. 5 is a schematic sectional view showing another exemplary configuration of the second particle.
Fig. 6 is a schematic sectional view showing another exemplary configuration of the second particle.

[Embodiments for Implementing the Invention]

Embodiments for carrying out the present invention will now be described in detail. However, the invention is in no way limited to the following embodiments. In the following embodiments, constituent elements (including element steps and the like) of the embodiments are not essential, unless otherwise specified. Likewise, numerical values and ranges thereof are not intended to restrict the invention.

In the present disclosure, the definition of the term "step" includes not only an independent step which is distinguishable from another step, but also a step which is not clearly distinguishable from another step, as long as the purpose of the step is achieved.

In the present disclosure, any numerical range described using the expression "from...to" represents a range in which numerical values described before and after the "to" are included in the range as a minimum value and a maximum value, respectively.

In a numerical range described in stages, in the present disclosure, an upper limit value or a lower limit value described in one numerical range may be replaced with an upper limit value or a lower limit value in another numerical range described in stages. Further, in a numerical range described in the present disclosure, the upper limit value or the lower limit value in the numerical range may be replaced with a value shown in the Examples.

In the present disclosure, each component may include plural kinds of substances corresponding to the component. In a case in which plural kinds of substances corresponding to each component are present in a composition, the content ratio or content of each component refers to the total content ratio or content of the plural kinds of substances present in the composition, unless otherwise specified.

In the present disclosure, particles corresponding to each component may include plural kinds of particles. In a case in which plural kinds of particles corresponding to each component are present in a composition, the particle size of each component refers to the value of the particle size of a mixture of the plural kinds of particles present in the composition, unless otherwise specified.

In the present disclosure, the layer refers not only a configuration in which the layer is formed over the entire region but also a configuration in which the layer is formed on part of the region, when the region is observed.

<Negative electrode material for lithium ion secondary battery>

The negative electrode material for lithium ion secondary battery (hereinafter, also referred to as a negative electrode material) is a mixture of first particles, in which plural flat graphite particles are aggregated or bonded such that principal surfaces of the graphite particles are not parallel to each other, and second particles including silicon oxide.

In the present disclosure, the "mixture of first particles and second particles including silicon atoms" refers to a state in which the positional relationship between the first particles and the second particles is not fixed, i.e., a state in which the first particles and the second particles are not compounded with each other via a carbonized product of an organic substance.

In the present disclosure, being "compounded" refers to a state in which particles are aggregated or bonded to each other via a carbonized product of an organic substance.

The negative electrode material of the disclosure may include other components than the first particles and the second particles, as necessary.

By using the negative electrode material of the disclosure, it is possible to produce a lithium ion secondary battery that exhibits an excellent effect of suppressing expansion of the negative electrode during charging, and excellent cycle characteristics. The reason for this is not exactly clear, but may be considered as follows.

In the negative electrode material of the disclosure, particles are readily movable since the positional relationship therebetween is not fixed. As a result, when the second particles become expanded upon charging, particles are allowed to move to fill the spaces among the same by an expansion-repulsion force, whereby expansion of the negative electrode is suppressed.

Further, since the first particles have a configuration in which plural graphite particles are aggregated or bonded such that principal surfaces of the graphite particles are not parallel to each other, the particles tend to include a great amount of space inside thereof. Therefore, when the second particles expand upon charging, an increase in volume is alleviated by the spaces in the first particles, whereby expansion of the negative electrode is suppressed.

Further, since the first particles have a configuration in which plural graphite particles are aggregated or bonded such that principal surfaces of the graphite particles are not parallel to each other, the particles tend to have a great amount of rough surfaces. Therefore, a sufficient amount of contact points between the first particles and the second particles is secured by the roughness of the surface, even when the second particles are moved, whereby electroconductivity is maintained. In addition, even when the second particles are broken into fine fragments as a result of expansion upon charging, a sufficient amount of contact points between the first particles and the second particles is secured by the roughness of the surface, whereby electroconductivity is maintained.

Accordingly, it is considered that a lithium ion secondary battery with excellent cycle characteristics can be obtained by the negative electrode material.

It is also noted that the negative electrode material, which can be obtained without a process of compounding the first particles with the second particles, is advantageous in terms of productivity as compared with the negative electrode material obtained by compounding the first particles and the second particles.

When the negative electrode material is included in the electrode, whether or not the negative electrode material is in a state of a mixture of the first particles and the second particles can be determined by, for example, by the following method.

A sample electrode or an electrode for observation is embedded in an epoxy resin, and a section of the electrode is created with an ion milling apparatus (E-3500, Hitachi High-Tech Corporation). The section is then investigated by image and element mapping with SEM-EDX.

The sample electrode can be prepared by, for example, preparing a dispersion by adding water to a mixture of the negative electrode material (98 parts by mass), styrene-butadiene resin as an organic binder (1 part by mass) and carboxy methyl cellulose as a thickener (1 part by mass) such that the viscosity at 25°C is adjusted to from 1500 mPa·s to 2500 mPa·s, forming a layer with a thickness of approximately 70 μm (before drying) with the dispersion on a copper foil with a thickness of 10 μm, and drying the layer at 120°C for 1 hour.

The negative electrode material preferably has a tap density of from 0.70 g/cm$^3$ to 1.30 g/cm$^3$, more preferably from 0.85 g/cm$^3$ to 1.20 g/cm$^3$, further preferably from 0.90 g/cm$^3$ to 1.10 g/cm$^3$.

The tap density is an indicator of a degree of densification of the negative electrode. When the tap density is not less than 0.70 g/cm$^3$, the negative electrode material is more susceptible to compression upon formation of the negative electrode, and a lithium ion secondary battery with a highly densified electrode and a high degree of capacity tends to be obtained. When the tap density is not greater than 1.30 g/cm$^3$, the negative electrode material is more susceptible to permeation of an electrolyte, and a lithium ion secondary battery with more improved input-output characteristics tends to be obtained.

The tap density of the negative electrode can be measured by the following method.

A sample powder (100 cm$^3$) is charged in a scaled flat-bottom tube with a volume of 150 cm$^3$ and capped. Then, the tube is dropped from a height of 5 cm for 250 times, and the density of the sample powder is calculated from the measured mass (g) and volume (cm$^3$).

Further, the negative electrode material preferably has a BET specific surface area based on nitrogen gas adsorption of from 1.5 m$^2$/g to 8.0 m$^2$/g, more preferably from 2.0 m$^2$/g to 7.0 m$^2$/g, further preferably from 3.0 m$^2$/g to 5.0 m$^2$/g.

The specific surface area is an indicator for the area of a surface at which the negative electrode material contacts the electrolyte. When the specific surface area is not less than 1.5 m$^2$/g, a rapid increase in current density per area may be avoided and the load may be suppressed, whereby the rapid charge-discharge efficiency tends to be improved. When the specific surface area is not greater than 8.0 m$^2$/g, the surface at which the electrode material contacts the electrolyte is not too large and an increase in the amount of reaction sites at which the electrolyte decomposes is suppressed, whereby generation of a gas is suppressed. Further, the initial charge-discharge efficiency tends to be improved.

In the disclosure, the specific surface area of the negative electrode material is obtained by measuring the amount of nitrogen absorption at a temperature of liquid nitrogen (77K) by a 5-point method using a specific surface area/pore distribution measurement apparatus (for example, ASAP2020, Micromeritics Japan), and calculating the specific surface area by a BET method (relative pressure range: 0.05-0.2) based on the measured amount.

The negative electrode material preferably has a density after pressing of from 1.7 g/cm$^3$ to 2.05 g/cm$^3$, more preferably from 1.8 g/cm$^3$ to 2.05 g/cm$^3$, further preferably from 1.85 g/cm$^3$ to 2.0 g/cm$^3$, for example.

The density after pressing of the negative electrode material can be measured by the following method.

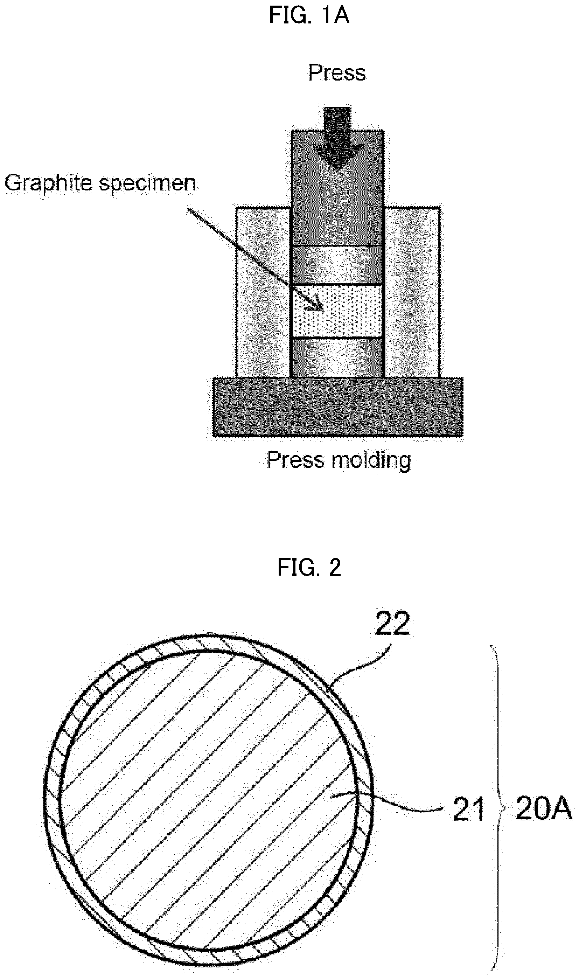

The specimen (1.2 g) is charged in a metal case with a diameter of 13 mm (base area: 1.327 cm$^2$) and compressed with an autograph attached with a load cell (Shimadzu Corporation), having a configuration as shown in Fig. 1, at a constant rate of 10 mm/min and a pressing force of 1t (surface pressure: 754 kg/cm$^2$). After the retention for 30 minutes, the pressure is released and the thickness of the specimen is measured 5 minutes after the release. The volume of the specimen is calculated based on the measured thickness, whereby the density after pressing is calculated.

The oil absorption amount of the negative electrode material is an indicator for the proportion of voids in the negative electrode material. The greater the oil absorption amount is, the greater the proportion of the voids in the negative electrode material is.

From the viewpoint of the volume of the voids that would buffer the expansion of the second particles, for example, the negative electrode material preferably has an oil absorption amount of not less than 50 ml/100 g, more preferably not less than 55 ml/100 g, further preferably not less than 60 ml/100 g. The oil absorption amount of the negative electrode material can be measured by the method as described later.

In the following, the components included in the negative electrode material are described.

First particles

The negative electrode material includes first particles in which plural flat graphite particles are aggregated or bonded such that principal surfaces of the graphite particles are not parallel to each other.

The negative electrode material may include a single kind of the first particles, or may include two or more kinds in combination. Examples of the combination of two or more kinds of first particles include a combination of two or more kinds of first particles having the same average particle size but different compositions from each other; a combination of two or more kinds of first particles having the same composition but different average particle size from each other; and a combination of two or more kinds of first particles having different compositions and different average particle size from each other.

The configuration of the first particles is not particularly limited, as long as plural flat graphite particles are aggregated or bonded such that principal surfaces of the graphite particles are not parallel to each other. The first particles may include other particles, such as spherical graphite particles as mentioned later, as necessary. The first particles may have low-crystalline carbon that is disposed at at least a portion of a surface of the first particles.

(Flat graphite particles)

The flat graphite particles are non-spherical particles having an anisotropic shape. Examples of the flat graphite particles include scaly graphite particles, flake graphite particles and partially-vein graphite particles.

The flat graphite particles preferably have an aspect ratio represented by A/B, in which A refers to the length of the long axis and B refers to the length of the short axis, of from 1.2 to 20, more preferably from 1.3 to 10. When the aspect ratio is 1.2 or more, the contact area among the particles is increased and conductivity tends to be improved. When the aspect ratio is 20 or less, input/output properties such as rapid charge/discharge properties of the lithium ion secondary battery tends to improve.

The aspect ratio is obtained by observing the graphite particles and measuring the A/B of randomly selected 100 particles, and calculating the arithmetic average value of the measured values of the 100 particles.

In the measurement, the length of the long axis A of a graphite particle is determined as a distance between a pair of parallel external tangent lines a1 and a2, which are most remote from each other among the parallel external tangent lines, of the projection image of the graphite particle. The length of the short axis B is determined as a distance between a pair of parallel external tangent lines b1 and b2, which are closest to each other among the parallel external tangent lines, of the projection image of the graphite particle.

In the disclosure, the term "principal surfaces of the graphite particles are not parallel to each other" refers to a state in which surfaces with the largest section of plural flat graphite particles (principal surfaces) are not oriented in a certain direction. Whether or not the principal surfaces of the graphite particles are not parallel to each other can be determined with a microscope.

When the plural flat graphite particles are aggregated or bonded such that principal surfaces of the graphite particles are not parallel to each other, it is possible to suppress an increase in a degree of orientation of principal surfaces of the first particles in the negative electrode, and to suppress expansion of the negative electrode upon charging. As a result, the cycle characteristics of the lithium ion secondary battery tends to improve.

In the disclosure, the state in which the plural flat graphite particles are "aggregated or bonded" refers to a state in which at least two flat graphite particles are aggregated or bonded. The term "bonded" refers to a state in which particles are chemically bonded directly or via a carbonaceous substance. The term "aggregated" refers to a state in which particles maintain an aggregated state due to the particle shape or the like, without the aid of chemical bonding. The flat graphite particles may be aggregated or bonded via a carbonaceous substance. Examples of the carbonaceous substance include a graphitized product of the graphitizable binder. From the viewpoint of mechanical strength, a state in which two or more flat graphite particles are bonded via a carbonaceous substance is preferred. Whether or not the flat graphite particles are aggregated or bonded can be determined by observing with a scanning electron microscope, for example.

From the viewpoint of an ability to aggregate or bond, the average particle size of the flat graphite particle is preferably from 1 μm to 50 μm, more preferably from 1 μm to 25 μm, further preferably from 1 μm to 15 μm, for example. The average particle size of the flat graphite particles may be measured using a laser diffraction particle distribution measurement apparatus, and is determined as a particle size at which the accumulation from the side of smaller particle size in a volume-based particle size distribution is 50% (D50).

The flat graphite particles and the material thereof are not particularly limited, and examples thereof include artificial graphite, vein natural graphite, flake natural graphite, coke, resin, tar and pitch. Among these, particles of artificial graphite, natural graphite and graphite obtained from coke, which are highly crystalline and soft, are advantageous in terms of increasing the density of the negative electrode.

(Spherical graphite particles)

The first particles may further include spherical graphite particles. Generally, spherical graphite particles have a higher degree of density than flat graphite particles. Therefore, by including spherical graphite particles, it is possible to increase the density of the negative electrode material, thereby reducing a pressure to be applied during a densification process. As a result, orientation of flat graphite particles in a direction along a surface of a current collector is suppressed, whereby achieving favorable migration of lithium ions.

When the first particles include spherical graphite particles, the flat graphite particles and the spherical graphite particles may be aggregated or bonded via a carbonaceous substance. Examples of the carbonaceous substance include graphite obtained by graphitization of a binder such as tar or pitch. Whether or not the first particles include spherical particles can be determined by observing the first particles with a scanning electron microscope.

When the first particles include spherical graphite particles, each of the first particles preferably includes the total number of flat graphite particles and spherical graphite particles of 3 or more, more preferably from 5 to 20, further preferably from 5 to 15, for example.

Examples of the spherical graphite particles include spherical artificial graphite and spherical natural graphite. From the viewpoint of achieving a sufficient tap density of the first particles, the spherical graphite particles with a high degree of density are preferred. Specifically, spherical natural graphite obtained through a spheronization process so as to have a high tap density are preferred. Since the spherical natural graphite has a high degree of peel strength and is less likely to remove from the current collector even if the electrode is strongly pressed, it is possible to obtain a negative electrode material having a stronger peel strength by using the same as the first particles.

Further, since the spherical graphite particles tend to be higher in density than the flat graphite particles, it is possible to reduce a pressure to be applied to the negative electrode during the densification process, and is effective for suppress the orientation of the graphite particles in a direction along the current collector.

From the viewpoint of the ease of forming the first particles, the average particle size of the spherical graphite particles is preferably from 5 $\mu$m to 40 $\mu$m, more preferably from 8 $\mu$m to 35 $\mu$m, further preferably from 10 $\mu$m to 30 $\mu$m, for example. The average particle size of the spherical graphite particles may be measured using a laser diffraction particle distribution measurement apparatus, and is determined as a particle size at which the accumulation from the side of smaller particle size in a volume-based particle size distribution is 50% (D50).

(Low-crystallinity carbon)

The first particles may have low-crystallinity carbon on at least a part of a surface of the first particles. Existence of the low-crystallinity carbon tends to contribute to improvement in the input-output characteristics, such as rapid charge-discharge characteristics, of the lithium ion secondary battery.

The low-crystallinity carbon refers to carbon having an R value in Raman spectrum of 0.5 or more. The R value of the low-crystallinity carbon is preferably from 0.5 to 1.5, more preferably from 0.7 to 1.3, further preferably from 0.8 to 1.2, for example.

The R value is given as a value of Id/Ig, in which the Id is the intensity at a maximum peak that appears at approximately 1360 cm$^{-1}$ and the Ig is the intensity at a maximum peak that appears at approximately 1580 cm$^{-1}$ in the Raman spectrum obtained by laser Raman spectroscopy with an excitation wavelength of 532 nm.

The peak that appears at approximately 1360 cm$^{-1}$ is generally a peak corresponding to an amorphous structure of carbon, and is observed in a range of from 1300 cm$^{-1}$ to 1400 cm$^{-1}$, for example.

The peak that appears at approximately 1580 cm$^{-1}$ is generally a peak corresponding to a graphite crystal structure of carbon, and is observed in a range of from 1530 cm$^{-1}$ to 1630 cm$^{-1}$, for example.

The R value may be measured by the following conditions using a Raman spectrum measurement apparatus (for example, NSR-1000, JASCO Corporation).

Laser wavelength: 532 nm
Radiant intensity: 1.5 mW (measured with laser power monitor)
Measurement range: from 830 cm$^{-1}$ to 1940 cm$^{-1}$
Time for radiation: 60 seconds
Area for radiation: 4 $\mu$m$^2$
Base line: from 1050 cm$^{-1}$ to 1750 cm$^{-1}$

(Average particle size)

From the viewpoint of further suppressing an effect on the degree of orientation and further improving the permeability of the negative electrode to the electrolyte, the first particles preferably has an average particle size of from 5 $\mu$m to 40 $\mu$m, more preferably from 10 $\mu$m to 30 $\mu$m, further preferably from 10 $\mu$m to 25 $\mu$m. The average particle size is measured with a laser diffraction particle size distribution measurement apparatus, and is a particle size at which the accumulation from the side of smaller particle size in the volume-based particle distribution is 50% (D50).

When the negative electrode material is in the form of an electrode (negative electrode) obtained using the negative electrode material, examples of the method for measuring the average particle size include a method in which a sample electrode for observation is embedded in an epoxy resin, and a section of the electrode is mirror-polished and observed with a scanning electron microscope (for example, VE-7800, Keyence Corporation); and a method in which a section of the electrode is formed with an ion milling apparatus (E-3500, Hitachi High-Tech Corporation) and observed with a scanning electron microscope (for example, VE-7800, Keyence Corporation). In these methods, the median value of the particles sizes of randomly selected 100 particles is regarded as the average particle size.

The sample electrode may be prepared by the method as described above.

(Oil absorption amount)

The oil absorption amount of the fist particles is preferably 50 ml/100 g or more, more preferably from 50 ml/100 g to 95 ml/100 g, further preferably from 60 ml/100 g to 80 ml/100 g.

When the oil absorption amount of the fist particles is 50 ml/100 g or more, the particles have more spaces inside thereof and expansion of the negative electrode upon charging is more suppressed. Further, the cycle characteristics of the lithium ion secondary battery tends to be further improved.

The oil absorption amount may be measured by a method described in JIS K 6217-4:2008 (Carbon Black for Rubber -basic characteristics- section IV: measurement of oil absorption amount) in which linseed oil (Kanto Kagaku Co., Ltd.) is used as the test liquid instead of dibutyl phthalate (DBP).

Specifically, a test powder is titrated with linseed oil using a constant rate buret, and a change in the viscous characteristics is measured using a torque detector. Then, the amount of linseed oil per mass of the test powder, corresponding to a torque at 70% of the maximum torque as generated, is determined as the oil absorption amount (ml/100 g). The measurement may be performed using an absorption amount measurement apparatus available from Asahi Souken Corporation, for example.

(Degree of circularity)

The first particles preferably have a degree of circularity, measured with a flow-type particle analyzer, of from 0.83 to 0.95, more preferably from 0.85 to 0.93, further preferably from 0.87 to 0.93.

The degree of circularity may be measured by the following method.

To a 10-ml test tube, 5 ml of an aqueous solution including 0.2 % by mass of a surfactant (Liponol T/15, Lion Specialty Chemicals Co., Ltd.) were charged, and a test sample is added thereto such that the particle concentration is within 10000 to 30000 (number of particles per $\mu$l). Then, the test tube is stirred for 1 minute at a rotation rate of 2000 rpm with a vortex mixer (Corning Incorporated). Immediately after the stirring, the measurement is conducted by the following conditions using a wet flow-type particle analyzer (for example, FPIA-3000, Malvern Panalytical Ltd.)

Measurement environment: 25°C $\pm$3
Measurement mode: HPF
Count mode: total count
Effective number of analysis: 10000
Particle concentration: 10000-30000
Sheath reagent: particle sheath reagent
Magnification of object lens: 10

The tap density of the first particles is preferably from 0.70 g/cm$^3$ to 1.30 g/cm$^3$, more preferably from 0.85 g/cm$^3$ to 1.20 g/cm$^3$, further preferably from 0.90 g/cm$^3$ to 1.10 g/cm$^3$. The tap density of the first particles may be measured by the same method for the tap density of the negative electrode material.

The specific surface area of the first particles is preferably from 1.5 m$^2$/g to 8.0 m$^2$/g, more preferably from 2.0 m$^2$/g to 7.0 m$^2$/g, further preferably from 3.0 m$^2$/g to 5.0 m$^2$/g. The specific surface area of the first particles may be measured by the same method for the specific surface area of the negative electrode material.

(Content of first particles)

The content of the first particles with respect to the total amount of the negative electrode material is not particularly limited. For example, the content of the first particles is preferably from 70% by mass to 99.5% by mass, more preferably from 80% by mass to 99% by mass, further preferably from 85% by mass to 98% by mass.

When the content of the first particles is not less than 70% by mass, expansion of the negative electrode upon charging is more suppressed, and the cycle characteristics of the lithium ion secondary battery tends to be further improved. When the content of the first particles is not more than 99.5% by mass, the charge-discharge capacity of the lithium ion secondary battery tends to be further improved.

(Method of producing first particles)

The method of producing the first particles is not particularly limited. For example, the method may include (a) a process of obtaining a mixture that includes a graphitizable binder and at least one selected from the group consisting of a graphitizable aggregate and graphite; and
(b) a process of graphitizing the mixture.
In process (a), a mixture is obtained by mixing a graphitizable binder with at least one selected from the group consisting of a graphitizable aggregate and graphite. As necessary, the mixture may be added with a graphitization catalyst, a fluidity-imparting agent, and the like.
The graphitizable aggregate is not particularly limited as long as it is in the form of a powder, and examples include cokes such as fluid coke, needle coke and mosaic coke. In order to obtain graphite that has higher charge characteristics and a lower degree of crystallinity, carbon black may be used.
The graphite is not particularly limited as long as it is in the form of a powder, and examples include flaky artificial graphite, vain natural graphite, flaky natural graphite, spherical artificial graphite, and spherical natural graphite.
Examples of the graphitizable binder include pitch or tar of coal-type, petroleum-type or artificial, thermoplastic resins and thermosetting resins.
Examples of the graphitization catalyst include a substance having a catalytic activity for graphitization, such as silicon, iron, nickel, titanium, boron, vanadium and aluminum, carbides, oxides and nitrides of these substances, and mica-like clay minerals.
From the viewpoint of the ease of molding the mixture, the mixture preferably includes a fluidity-imparting agent. In particular, when the molding is performed by extrusion molding, in which the molding is performed while the mixture is in a flowable state. Further, inclusion of the fluidity-imparting agent can reduce the amount of the graphitizable binder, whereby improvement in the battery properties, such as the initial charge/discharge efficiency of the negative electrode material, may be expected.
When the mixture obtained in process (a) includes spherical graphite particles, the amount thereof with respect to 100 parts by mass of the mixture is preferably 80 parts by mass or less, more preferably 60 parts by mass or less.
When the amount of the spherical graphite particles is within the above range, it is possible to achieve an excellent balance between the effect of including flat particles and the effect of including spherical particles (i.e., exhibits a high discharge capacity, a low electrode expansion rate and favorable cycle characteristics even when the negative electrode is subjected to a densification treatment).
The content of the graphitizable binder with respect to 100 parts by mass of the mixture obtained in process (2) is preferably from 5 parts by mass to 30 parts by mass, more preferably from 10 parts by mass to 30 parts by mass, for example. By adjusting the content of the graphitizable binder to an appropriate range, it is possible to suppress an increase in the specific surface area of the flat graphite particles obtained by the graphitization.
The method for obtaining the mixture in process (a) is not particularly limited, and may be performed using a kneader, for example. The mixing is preferably performed at a temperature higher than the softening point of the graphitizable binder. Specifically, when the mixing is preferably performed at from 50°C to 300°C when the graphitizable binder is pitch or tar, and at from 20°C to 100°C when the graphitizable binder is a thermosetting resin.
In process (b), the mixture obtained in process (a) is graphitized. Specifically, components that are graphitizable in the mixture are graphitized. The graphitization is preferably performed in an atmosphere in which the mixture is resistant to oxidation, such as nitrogen, argon or vacuum. The temperature for the graphitization is not particularly limited, as long as the graphitizable components can be graphitized. For example, the temperature may be 1500°C or more, 2000°C or more, 2500°C or more, or 2800°C or more. The upper limit of the temperature is not particularly limited, and may be 3200°C or less, for example.
When the temperature is 1500°C or more, a change in crystals occurs may be caused. When the temperature is 2000°C or more, development of graphite crystals tends to be favorable. When the temperature is 2500°C or more, a high-capacity graphite crystals that can store more lithium ions tends to be formed, and the amount of ash tends to be suppressed due to the reduced amount of graphitization catalyst that remains after the thermal treatment. When the temperature is 3200°C or less, sublimation of a part of graphite tends to be suppressed.
The first particles are obtained by pulverizing the product obtained by the graphitization. The method for the pulverization is not particularly limited, and may be performed by a known method such as a jet mill, a vibration mill, a pin mill or a hammer mill. The pulverized product may be subjected to classification. The method for the classification is not particularly limited, and may be performed by a known method using a vibration sifter, a rotary dry-type sifter or the like.
The method for producing the negative electrode material may include, between process (a) and process (b), at least one selected from the group consisting of (c) a process of molding the mixture and (d) a process of subjecting the mixture to a thermal treatment.
The method for molding in process (c) is not particularly limited. For example, the molding may be performed by pulverizing the mixture and packing the same in a container such as a metal case. Alternatively, the mixture may be molded by extrusion molding while the mixture is in a flowable state.

By molding the mixture, the bulk density of the mixture can be increased. As a result, the amount of the mixture to be introduced in the graphitization furnace can be increased, whereby the energy efficiency of the graphitization can be improved. Further, when the mixture includes a graphitization catalyst, a distance between the catalyst and the graphitizable aggregate is decreased, and the reaction time for graphitization becomes shortened. As a result, the energy efficiency can be improved and the effects on the environmental can be reduced. Further, since the use efficiency of the graphitization catalyst is increased, a loss due to sublimation of the unused catalyst can be reduced as a result of shortening the distance between the catalyst and the graphitizable aggregate.

The degree of development of graphite crystals can be regulated by adjusting the conditions such as performing or not performing the molding of the mixture; the bulk density of the molded mixture; the type or the content of the graphitization catalyst; and the temperature or the time for the graphitization.

From the viewpoint of suppressing the generation of a gas during the graphitization in process (b), the mixture is preferably subjected to a thermal treatment to remove volatile components from the mixture in process (d). The thermal treatment is more preferably performed after molding the mixture in process (c). The thermal treatment is preferably performed at a temperature at which the volatile components can be removed from the mixture, for example, at from 500°C to 1000°C.

As necessary, a thermal treatment may be performed on the first particles to which an organic compound is attached. By performing a thermal treatment on the first particles attached with an organic compound, the organic compound becomes low-crystalline carbon. As a result, low-crystalline carbon can be disposed at at least a part of a surface of the first particles.

The method for attaching an organic compound to a surface of the first particles is not particularly limited, and examples thereof include a wet process of dispersing or mixing the first particles with a mixed solution in which an organic compound is dissolved or dispersed in a solvent, and then allowing the organic compound to attach to the first particles by removing the solvent; and a dry process of applying a mechanical force to a mixture obtained by mixing the first particles and a solid organic compound.

The organic compound is not particularly limited, as long as it has an ability to turn to low-crystalline carbon by the thermal treatment (carbon precursor). Examples of the organic compound include petroleum pitch, naphthalene, anthracene, phenanthroline, coal tar, phenol resin and polyvinyl alcohol. A single kind of the organic compound may be used, or two or more kinds may be used in combination.

The temperature for the thermal treatment on the first particles to which an organic compound is attached is not particularly limited, as long as the organic compound can be carbonized, and is preferably from 400°C to 1000°C, for example. The thermal treatment is preferably performed in an inert gas atmosphere, such as nitrogen.

Second particles

The negative electrode material includes second particles including silicon atoms.

The negative electrode material may include a single kind of the second particles, or may include two or more kinds in combination. Examples of the combination of two or more kinds of the second particles include a combination of two or more kinds of the second particles having the same average diameter but different compositions from each other; a combination of two or more kinds of the second particles having the same composition but different average diameters from each other; and a combination of two or more kinds of the second particles having different compositions and different average diameters from each other.

The second particles are particles including silicon oxide.

From the viewpoint of further improving the capacity of the lithium ion secondary battery, the second particles are preferably particles that substantially consist of silicon oxide.

In the present disclosure, the term "substantially" refers to that the particles may include unintentional impurity. In that case, the content of the impurity in the second particles is not more than 10% by mass, preferably not more than 5% by mass, for example.

In the present disclosure, the "silicon oxide" refers to a compound that is generally described as $SiO_x$, and examples thereof include $SiO_2$ (x=2), $SiO$ (x=1) and a mixture thereof (1<x<2).

From the viewpoint of further improving the charge-discharge efficiency of the lithium ion secondary battery, the second particles preferably have a configuration in which silicon crystallites are dispersed in silicon oxide. When silicon oxide includes silicon crystallites dispersed therein, a diffraction peak at approximately $2\theta = 28.4°$, which is attributable to the (111) plane of silicon, is observed in the measurement of powder X-ray diffraction (XRD) using CuKα line at a wavelength of 0.154056 nm.

The size of the silicon crystallites is preferably from 2 nm to 8 nm, more preferably from 3 nm to 6 nm. When the size of the silicon crystallites is not less than 2 nm, the reaction between lithium ions and silicon oxide can be controlled, and the charge-discharge efficiency of the lithium ion secondary battery tends to be further improved. When the size of the silicon crystallites is not more than 8 nm, localization of the silicon crystallites in the silicon oxide is suppressed and lithium ions are readily dispersed in the silicon oxide, whereby a favorable charge capacity tends to be achieved.

The X-ray diffraction measurement using CuKα line may be performed using an X-ray diffraction analyzer (for example, MultiFlex, Rigaku Corporation).

Tube current: 40 mA
Tube voltage: 40 kV
Divergence slit: 1°
Scattering slit: 1°
Receiving slit: 0.3 mm
Measurement range: $10° \leq 2\theta \leq 40°$
Sampling step width: 0.02°

The size of the silicon crystallites can be calculated from the half width of a diffraction peak at approximately $2\theta=28.4°$ by the following Scherrer's equation.

$$D = K\lambda/B_{\cos}\theta$$

$$B = (B_{\cos}{}^2 - b^2)^{1/2}$$

D: Size of crystallite (nm)
K: Scherrer's constant (0.94)
λ: Source wavelength (0.154056 nm)
θ: Angle of peak of measured half width
b: Measured half width of standard silicon (Si)

Particles having a configuration in which silicon crystallites are dispersed in silicon oxide may be obtained by, for example, causing disproportionation of silicon oxide particles by subjecting the same to a thermal treatment at a temperature of from 700°C to 1300°C in an inert atmosphere. The higher the temperature for the thermal treatment is, and the longer the time for the thermal treatment is, the size of silicone crystallites tends to increase.

The second particles may have carbon at least at a portion of a surface thereof. When carbon is disposed at at least a portion of a surface of the second particles, the initial capacity and the initial charge-discharge efficiency of the lithium ion secondary battery tend to be further improved.

When carbon is disposed at at least a portion of a surface of the second particles, the content of the carbon with respect to the total amount of the second particles is preferably from 0.5% by mass to less than 5.0% by mass, more preferably from 0.5% by mass to 4.5% by mass, further preferably from 0.5% by mass to 4.0% by mass, for example.

The content of the carbon may be measured by high-frequency sintering-infrared spectroscopy, using a carbon-sulfur simultaneous analyzer (for example, CSLS600, LECO Japan Corporation).

The carbon disposed at at least a portion of a surface of the second particles is preferably low-crystalline carbon. When low-crystalline carbon is disposed at at least a portion of a surface of the second particles, the charge-discharge capacity of the lithium ion secondary battery tends to be further improved. The R value of the second particles, having low-crystalline carbon at at least a portion of a surface thereof, is preferably from 0.5 to 1.5, more preferably from 0.7 to 1.3, further preferably from 0.8 to 1.2.

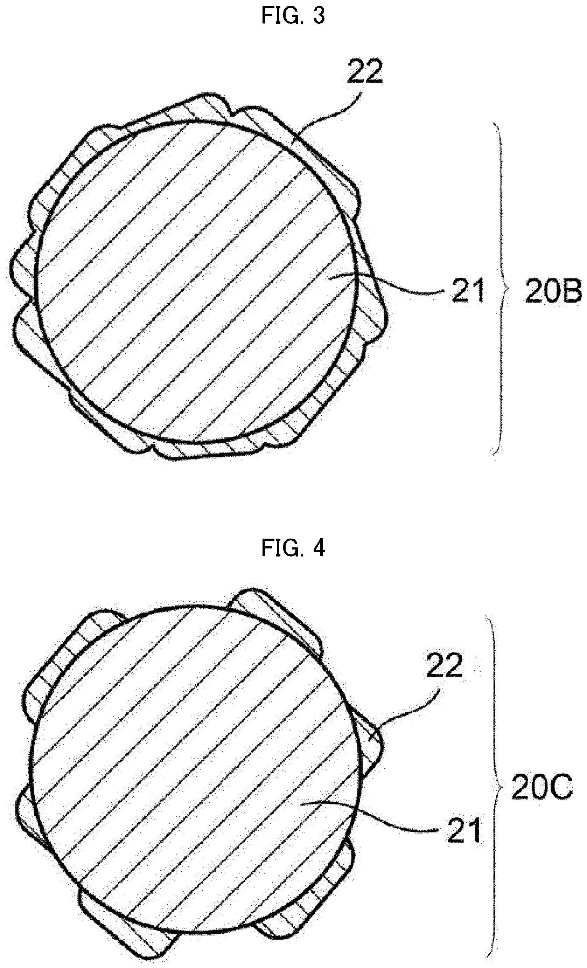

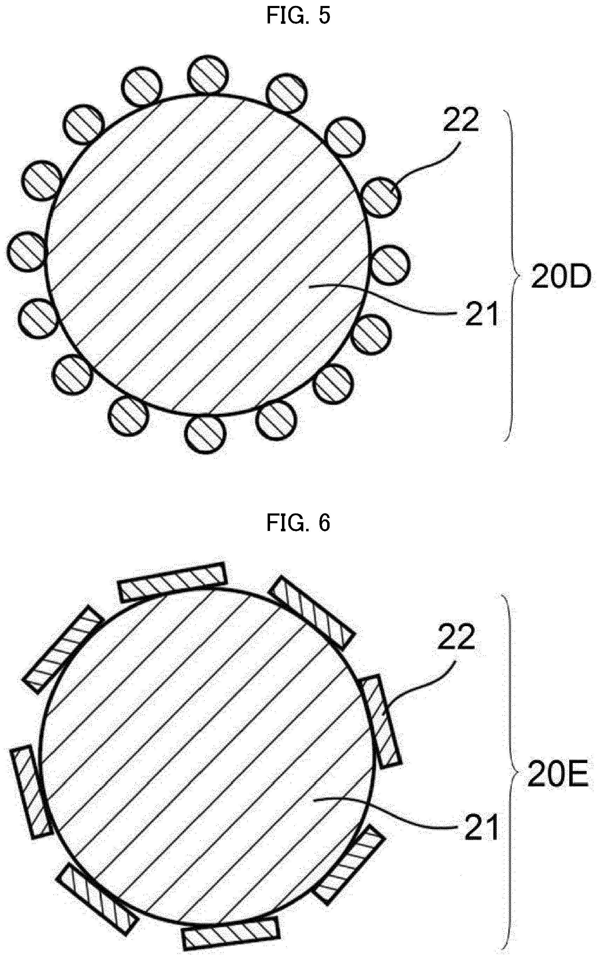

When carbon is disposed at at least a portion of a surface of the second particles, the configuration thereof is not particularly limited. Fig. 2 to Fig. 6 show the schematic sectional views of the exemplary configurations of the second particles. In the second particle 20A shown in Fig. 2, carbon 22 covers the entire surface of silicon oxide particle 21. In the second particle 20B shown in Fig. 3, carbon 22 covers the entire surface of silicon oxide particle 21, but not in a uniform manner. In the second particle 20C shown in Fig. 4, carbon 22 covers a portion of the surface of silicon oxide particle 21, and a portion of the surface of the silicon oxide particle 21 is exposed. In the second particle 20D shown in Fig. 5, carbon 22 is in the form of particles smaller than the silicon oxide particle 21 that exist at a surface of the silicon oxide particle 21. In the second particle 20E shown in Fig. 6, which is a modification of Fig. 5, carbon 22 is in the form of particles having a flaky shape.

In Fig. 2 to Fig. 6, although the silicon oxide particle 21 is schematically described as having a spherical shape (circle in a section), the shape of the silicon oxide particle 21 is not particularly limited.

The method for disposing carbon at at least a portion of a surface of the second particles is not particularly limited, and examples thereof include a wet method in which the second particles are dispersed or mixed in a mixed solution in which an organic compound is dissolved or dispersed in a solvent, and the organic compound is attached to the second particles by removing the solvent; and a dry method in which the second particles and a solid organic compound are mixed, and the organic compound is attached to the second particles by adding a mechanical force thereto.

The organic compound is not particularly limited, as long as it has an ability to turn to low-crystalline carbon by a thermal treatment (carbon precursor). Examples of the organic compound include petroleum pitch, naphthalene, anthracene, phenanthroline, coal tar, phenol resin and polyvinyl alcohol. A single kind of the organic compound may be used, or two or more kinds may be used in combination.

The temperature for the thermal treatment to be performed on the second particles to which an organic compound is attached is not particularly limited as long as the organic compound can be carbonized, and is preferably from 750°C to 1300°C, for example. The thermal treatment is preferably performed in an inert gas atmosphere, such as nitrogen.

From the viewpoint of making the distribution of the second particles in the negative electrode material layer more equalized, and improving the cycle characteristics of the lithium ion secondary battery, the average particle size of the second particles is preferably from 0.1 $\mu$m to 20 $\mu$m, more preferably from 0.5 $\mu$m to 15 $\mu$m, further preferably from 1 $\mu$m to 15 $\mu$m, for example. The average particle size of the second particles may be measured using a laser diffraction particle distribution measurement apparatus, and is determined as a particle size at which the accumulation from the side of smaller particle size in a volume-based particle size distribution is 50% (D50). The average particle size of the second particles may be measured in the same manner as the average particle size of the first particles.

From the viewpoint of disposing the second particles at the spaces inside the first particles in an appropriate manner, the ratio of the average particle size of the first particles with respect to the average particle size of the second particles (average particle size of first particles / average particle size of second particles) is from 1.0 to 10.0, more preferably 1.5 to 8.0, preferably from 1.5 to 6.0, for example.

The second particles preferably have a tap density of from 0.7 g/cm$^3$ to 1.3 g/cm$^3$, more preferably from 0.85 g/cm$^3$ to 1.25 g/cm$^3$, further preferably from 0.9 g/cm$^3$ to 1.2 g/cm$^3$. The tap density of the second particles may be measured in the same manner as the tap density of the negative electrode material.

The second particles preferably have a specific surface area of 0.5 m$^2$/g or more, more preferably 1.0 m$^2$/g or more. The specific surface area of the second particles may be measured in the same manner as the specific surface area of the negative electrode material.

The content of the second particles with respect to the total amount of the negative electrode material is preferably from 0.1% by mass to 20% by mass, more preferably from 0.5% by mass to 15% by mass, further preferably from 1% by mass to 10% by mass, for example. When the content of the second particles is not less than 0.1% by mass, the charge-discharge capacity of the lithium ion secondary battery tends to be further improved. When the content of the second particles is not more than 20% by mass, expansion of the negative electrode upon charging is further suppressed, and the cycle characteristics of the lithium ion secondary battery tends to be further improved.

Other components

The negative electrode material may include particles that does not form the first particles, other than the first particles and the second particles.

Examples of graphite particles include particles of artificial graphite, natural graphite, MC (mesophase carbon) and the like. The graphite particles may be flat graphite particles or spherical graphite particles, and may be selected according to the desired properties. For example, the graphite particles may be flat graphite particles from the viewpoint of improving the cycle characteristics by improving the electroconductive contact.

The graphite particles preferably have an average particle size of from 1 $\mu$m to 50 $\mu$m, for example. From the viewpoint of improving the electroconductive contact, the graphite particles more preferably have a smaller average particle size than the first particles, further preferably have a smaller average particle size than the second particles. The particle size of the flat graphite particles is preferably not more than 0.7 times as large as the average particle size of the first particles or the second particles, more preferably not more than 0.4 times as large as the average particle size of the first particles or the second particles.

The graphite particles preferably have a tap density of from 0.25 g/cm$^3$ to 1.3 g/cm$^3$, for example. In order to improve the electroconductive contact, the tap density is preferably as small as possible, by including graphite particles having a flat shape as much as possible. From the viewpoint of the specific surface area, the tap density is more preferably from 0.25 g/cm$^3$ to 0.8 g/cm$^3$, further preferably from 0.3 g/cm$^3$ to 0.5 g/cm$^3$.

The graphite particles preferably have a specific surface area of from 0.5 m$^2$/g to 25 m$^2$/g. From the viewpoint of improving the electroconductive contact, the specific surface area is more preferably from 7 m$^2$/g to 25 m$^2$/g, further preferably from 10 m$^2$/g to 17 m$^2$/g, when the graphite particles are natural graphite. From the viewpoint of improving the electroconductive contact, the specific surface area is more preferably from 2 m$^2$/g to 10 m$^2$/g, further preferably

from 4 m$^2$/g to 7 m$^2$/g, when the graphite particles are artificial graphite.

The negative electrode may include a conduction aid other than the first particles and the second particles, as necessary. Examples of the conduction aid include carbon black, graphite, acetylene black, an oxide that exhibits electroconductivity, and a nitride that exhibits electroconductivity.

<Method for producing lithium ion secondary battery>

The method for producing a negative electrode material for a lithium ion secondary battery (hereinafter, also referred to as a "method for producing a negative electrode material) includes a process of mixing the first particles, in which plural flat graphite particles are aggregated or bonded such that principal surfaces of the graphite particles are not parallel to each other, with the second particles including silicon atoms (hereinafter, also referred to as a "mixing process"). Specifically, the method for producing the negative electrode material includes a process of the first particles and the second particles as described above.

The method for mixing the first particles and the second particles is not particularly limited, and examples thereof include a wet process and a dry process. In the mixing process, other components such as a conductive aid may be mixed with the first particles and the second particles.

<Negative electrode material slurry for lithium ion secondary battery>

The negative electrode material slurry for a lithium ion secondary battery (hereinafter, also referred to as a "negative electrode material slurry") includes the negative electrode material according to the disclosure, an organic binder, and a solvent. As necessary, the negative electrode material slurry may include other components such as a thickener or a conduction aid.

The organic binder is not particularly limited, and examples thereof include styrene-butadiene copolymer (styrene-butadiene rubber), (meth)acrylic copolymers obtained by polymerization of an ethylenically unsaturated carboxylic acid ester (such as methyl(meth)acrylate, ethyl(meth)acrylate, butyl(meth)acrylate and hydroxyethyl(meth)acrylate) with an ethylenically unsaturated carboxylic acid (such as acrylic acid, methacrylic acid, itaconic acid, fumaric acid and maleic acid), and polymers such as polyvinylidene difluoride, poly(ethylene oxide), polyepichlorohydrin, polyphosphazene, polyacrylonitrile, polyimide and polyamide-imide.

The solvent is not particularly limited, and examples thereof include organic solvents such as N-methylpyrrolidone, dimethylacetamide, dimethylformamide and $\gamma$-butyrolactone, and water.

The negative electrode material slurry may include a thickener for adjusting the viscosity of the slurry, as necessary. Examples of the thickener include carboxymethyl cellulose, methyl cellulose, hydroxymethyl cellulose, ethyl cellulose, polyvinyl alcohol, polyacrylic acid and a salt thereof, oxidized starch, phosphorylated starch, and casein.

The negative electrode material slurry may include a conduction aid, as necessary. Examples of the conduction aid include carbon black, graphite, acethylene black, electroconductive oxides, and electroconductive nitrides.

<Negative electrode for lithium ion secondary battery>

The negative electrode a lithium ion secondary battery (hereinafter, also referred to as a "negative electrode") has a current collector and a negative electrode material layer that includes the negative electrode material according to the disclosure and is formed on the current collector.

The material and the shape of the current collector are not particularly limited, and examples thereof include a ribbon-shaped foil, a ribbon-shaped punched foil, or a ribbon-shaped mesh formed from a metal or an alloy such as aluminum, copper, nickel, titanium and stainless steel. It is also possible to use a porous material such as porous metal (foamed metal) and carbon paper.

The method for forming a negative electrode material layer, which includes the negative electrode material according to the disclosure, on a current collector is not particularly limited, and may be performed by a known method such as metal mask printing, electrostatic coating, dip coating, spray coating, roll coating, doctor blade coating, gravure coating, and screen printing. Integration of a negative electrode material layer with a current collector may be performed by a known process such as rolling, pressing or a combination thereof.

After forming a negative electrode material layer on a current collector, a thermal treatment (drying) may be performed, depending on the type of the organic binder. By performing a thermal treatment, the solvent included in the negative electrode material layer is removed, thereby promoting strengthening of the negative electrode by the organic binder, and improving the adhesion between the particles or between the particles and the current collector. In order to prevent oxidation of the current collector, the thermal treatment may be performed in an inactive atmosphere such as helium, argon or nitrogen, or in a vacuum.

Prior to the thermal treatment, the negative electrode may be subjected to a pressing treatment. By performing a pressing treatment, it is possible to adjust the density of the negative electrode. The density of the negative electrode is preferably from 1.5 $g/cm^3$ to 1.9 $g/cm^3$, more preferably from 1.6 $g/cm^3$ to 1.8 $g/cm^3$, for example. By increasing the density, it is possible to improve the capacity per volume of the negative electrode, and to improve the adhesion of the negative electrode layer to the current collector. As a result, the cycle characteristics of the lithium ion secondary battery tends to improve.

<Lithium ion secondary battery>

The lithium ion secondary battery according to the disclosure has a positive electrode, an electrolyte, and the negative electrode according to the disclosure. For example, the lithium-ion secondary battery has a configuration in which a negative electrode and a positive electrode are disposed to face each other via a separator, and an electrolyte is injected therein.

The positive electrode may be prepared by forming a positive electrode layer on a current collector. Examples of the current collector include a ribbon-shaped foil, a ribbon-shaped punched foil, or a ribbon-shaped mesh formed from a metal or an alloy such as aluminum, titanium and stainless steel.

The positive electrode material included in the positive electrode layer is not particularly limited, and examples thereof include a metallic compound, a metallic oxide, a metallic sulfide, and an electroconductive polymer. It is also possible to use lithium cobalt oxide ($LiCoO_2$), lithium nickel oxide ($LiNiO_2$), lithium manganese oxide ($LiMnO_2$), a multiple oxide thereof ($LiCo_xNi_yMn_zO_2$, x+y+z=1, 0<x, 0<y; $LiNi_{2-x}Mn_xO_4$, 0<x≦2), lithium-manganese spinel ($LiMn_2O_4$), lithium-vanadium compound, $V_2O_5$, $V_6O_{13}$, $VO_2$, $MnO_2$, $TiO_2$, $MoV_2O_8$, $TiS_2$, $V_2S_5$, $VS_2$, $MoS_2$, $MoS_3$, $Cr_3O_8$, CrzOs, olivine-type $LiMPO_4$(M:Co, Ni, Mn, Fe), electroconductive polymer such as polyacethylene, polyaniline, polypyrrole, polythiophene and polyacene, and porous carbon. These materials may be used alone or in combination of plural kinds. Among these, lithium nickel oxide ($LiNiO_2$) and a multiple oxide thereof ($LiCo_xNi_yMn_zO_2$, x+y+z=1, 0<x, 0<y; $LiNi_{2-x}Mn_xO_4$, 0<x≦2) have a high degree of capacity and are suitably used as the positive electrode material.

Examples of the separator include a nonwoven fabric, a cloth, a microporous film or a combination thereof, including polyolefin such as polyethylene and polypropylene as a major component. When the lithium-ion secondary battery has a configuration in which the positive electrode and the negative electrode are not in contact with each other, it is not necessary to use a separator.

As an electrolyte, it is possible to use an organic electrolyte solution, in which a lithium salt such as $LiClO_4$, $LiPF_6$, $LiAsF_6$, $LiBF_4$ or $LiSO_3CF_3$ is dissolved in a non-aqueous solvent such as ethylene carbonate, propylene carbonate, butylene carbonate, vinylene carbonate, fluoroethylene carbonate, cyclopentanone, sulfolane, 3-methylsulfolane, 2,4-dimethylsulfolane, 3-methyl-1,3-oxazolidin-2-one, $\gamma$-butyrolactone, dimethyl carbonate, diethyl carbonate, ethylmethyl carbonate, methylpropyl carbonate, butylmethyl carbonate, ethylpropyl carbonate, butylethyl carbonate, dipropyl carbonate, 1,2-dimethoxyethane, tetrahydrofuran, 2-methyltetrahydrofuran, 1,3-dioxolane, methyl acetate or ethyl acetate, alone or in combination of plural kinds.

Among these, an electrolyte including fluoroethylene carbonate tends to achieve a significant improvement in the cycle characteristics by forming a stable SEI (solid electrolyte interface) on a surface of the negative electrode, and is suitably used.

The configuration of the lithium-ion secondary battery is not particularly limited, and examples thereof include a paper-shaped battery, a button-shaped battery, a coin-shaped battery, a laminate-type battery, a cylindrical battery and a rectangular battery.

[Examples]

In the following, the embodiments as described above are explained more specifically based on the Examples. However, the embodiments are not limited to the Examples.

<Preparation of graphite particles and silicon oxide particles>

Graphite particles 1 to 7 and C1 to C3, and silicon oxide particles 1 to 4 used for the preparation of a negative electrode were prepared by the following process.

(Graphite particles 1)

A mixture was obtained by mixing a coke powder having an average particle size of 12 $\mu$m (55 parts by mass), tar pitch (25 parts by mass) and silicon carbide as a graphitization catalyst (20 parts by mass) and kneading for 1 hour at 100°C. Then, the mixture was molded by extrusion molding. The molded product was sintered at 1000°C in a nitrogen atmosphere. The sintered product was sintered at 2800°C in an Acheson furnace such that the graphitizable components were graphitized. The graphitized product (graphitized powder) was pulverized with a hammer mill and classified, thereby obtaining graphite particles 1 having an average particle size of 20 μm.

With a scanning electron microscope, it was confirmed that graphite particles 1 included particles in which plural flat graphite particles were aggregated or bonded such that principal surfaces of the graphite particles were not parallel to each other. The tap density, density after pressing, oil absorption amount, degree of circularity and specific surface area of graphite particles 1 were measured by the methods as described above. The results are shown in Table 1.

(Graphite particles 2)

A mixture was obtained by mixing a coke powder having an average particle size of 12 μm (40 parts by mass), spherical natural graphite particles having an average particle size of 20 μm (degree of circularity: 0.91) (20 parts by mass), tar pitch (20 parts by mass) and silicon carbide as a graphitization catalyst (20 parts by mass) and kneading for 1 hour at 100°C. Then, the mixture was molded by extrusion molding. The molded product was sintered at 1000°C in a nitrogen atmosphere. The sintered product was sintered at 2800°C in an Acheson furnace such that the graphitizable components were graphitized. The graphitized product (graphitized powder) was pulverized with a hammer mill and classified, thereby obtaining graphite particles 2 having an average particle size of 23 μm.

With a scanning electron microscope, it was confirmed that graphite particles 2 included particles in which plural flat graphite particles were aggregated or bonded such that principal surfaces of the graphite particles were not parallel to each other. The tap density, density after pressing, oil absorption amount, degree of circularity and specific surface area of graphite particles 2 are shown in Table 1.

(Graphite particles 3)

Graphite particles 3 having an average particle size of 18 μm were prepared in the same manner to graphite particles 2 but with different conditions for the classification.

With a scanning electron microscope, it was confirmed that graphite particles 3 included particles in which plural flat graphite particles were aggregated or bonded such that principal surfaces of the graphite particles were not parallel to each other. The tap density, density after pressing, oil absorption amount, degree of circularity and specific surface area of graphite particles 3 are shown in Table 1.

(Graphite particles 4)

Graphite particles 4 having an average particle size of 10 μm were prepared in the same manner to graphite particles 2 but with different conditions for the classification.

With a scanning electron microscope, it was confirmed that graphite particles 4 included particles in which plural flat graphite particles were aggregated or bonded such that principal surfaces of the graphite particles were not parallel to each other. The tap density, density after pressing, oil absorption amount, degree of circularity and specific surface area of graphite particles 4 are shown in Table 1.

(Graphite particles 5)

A mixture was obtained by mixing a coke powder having an average particle size of 12 μm (20 parts by mass), flat natural graphite particles having an average particle size of 3 μm (degree of circularity: 0.8) (20 parts by mass), spherical natural graphite particles having an average particle size of 20 μm (degree of circularity: 0.91) (20 parts by mass), tar pitch (20 parts by mass) and silicon carbide as a graphitization catalyst (20 parts by mass) and kneading for 1 hour at 100°C. With this mixture, graphite particles 5 having an average particle size of 20 μm were prepared in a similar manner to graphite particles 1.

With a scanning electron microscope, it was confirmed that graphite particles 5 included particles in which plural flat graphite particles were aggregated or bonded such that principal surfaces of the graphite particles were not parallel to each other. The tap density, density after pressing, oil absorption amount, degree of circularity and specific surface area of graphite particles 5 are shown in Table 1.

(Graphite particles 6)

A mixture was obtained by mixing flat natural graphite particles having an average particle size of 3 μm (degree of circularity: 0.8) (15 parts by mass), spherical natural graphite particles having an average particle size of 15 μm (degree of circularity: 0.91) (25 parts by mass), tar pitch (25 parts by mass) and silicon carbide as a graphitization catalyst (10 parts by mass) and kneading for 1 hour at 100°C. Further, the mixture (75 parts by mass) was mixed with spherical natural graphite particles having an average particle size of 15 $\mu$m (degree of circularity: 0.91) (25 parts by mass), and sintered at 1000°C in a nitrogen atmosphere. With this sintered product, graphite particles 6 having an average particle size of 15 $\mu$m were prepared in a similar manner to graphite particles 1.

With a scanning electron microscope, it was confirmed that graphite particles 6 included particles in which plural flat graphite particles were aggregated or bonded such that principal surfaces of the graphite particles were not parallel to each other. The tap density, density after pressing, oil absorption amount, degree of circularity and specific surface area of graphite particles 6 are shown in Table 1.

(Graphite particles 7)

Graphite particles 2 (70 parts by mass) and spherical natural graphite particles having an average particle size of 22 $\mu$m (degree of circularity: 0.94) (25 parts by mass) were mixed, whereby graphite particles 7 having an average particle size of 22.8 $\mu$m were obtained.

With a scanning electron microscope, it was confirmed that graphite particles 7 included particles in which plural flat graphite particles were aggregated or bonded such that principal surfaces of the graphite particles were not parallel to each other. The tap density, density after pressing, oil absorption amount, degree of circularity and specific surface area of graphite particles 7 are shown in Table 1.

(Graphite particles 8)

A mixture of graphite particles 3 (96 parts by mass) and tar pitch having a softening point of 100°C (4 parts by mass) was graphitized at 1100°C, whereby graphite particles 8 having an average particle size of 18.5 $\mu$m, i.e., graphite particles 3 coated with amorphous carbon, were obtained.

With a scanning electron microscope, it was confirmed that graphite particles 8 included particles in which plural flat graphite particles were aggregated or bonded such that principal surfaces of the graphite particles were not parallel to each other. The tap density, density after pressing, oil absorption amount, degree of circularity and specific surface area of graphite particles 8 are shown in Table 1.

(Graphite particles 9)

A mixture was obtained by mixing flat natural graphite particles having an average particle size of 3 $\mu$m (degree of circularity: 0.8) (5 parts by mass), spherical natural graphite particles having an average particle size of 15 $\mu$m (degree of circularity: 0.91) (55 parts by mass), tar pitch (20 parts by mass) and silicon carbide as a graphitization catalyst (20 parts by mass) and kneading for 1 hour at 100°C. The mixture was formed into blocks by press molding, and sintered at 1000°C in a nitrogen atmosphere. With this sintered product, graphite particles 9 having an average particle size of 17.8 $\mu$m were prepared in a similar manner to graphite particles 1.

With a scanning electron microscope, it was confirmed that graphite particles 9 included particles in which plural flat graphite particles were aggregated or bonded such that principal surfaces of the graphite particles were not parallel to each other. The tap density, density after pressing, oil absorption amount, degree of circularity and specific surface area of graphite particles 9 are shown in Table 1.

(Graphite particles C1)

Spherical graphite having an average particle size of 22.0 $\mu$m (degree of circularity: 0.94) were used as graphite particles C1.

The tap density, density after pressing, oil absorption amount, degree of circularity and specific surface area of graphite particles C1 are shown in Table 1.

With a scanning electron microscope, it was confirmed that graphite particles C1 did not include particles in which plural flat graphite particles were aggregated or bonded such that principal surfaces of the graphite particles were not parallel to each other.

(Graphite particles C2)

Spherical graphite (92 parts by mass) and tar pitch (8 parts by mass) were mixed and sintered at not less than 1000°C, thereby obtaining graphite particles C2 coated with amorphous carbon having an average particle size of 16 $\mu$m.

The tap density, density after pressing, oil absorption amount, degree of circularity and specific surface area of graphite particles C2 are shown in Table 1.

With a scanning electron microscope, it was confirmed that graphite particles C2 did not include particles in which plural flat graphite particles were aggregated or bonded such that principal surfaces of the graphite particles were not parallel to each other.

(Graphite particles C3)

Spherical graphite (92 parts by mass) and tar pitch (8 parts by mass) were mixed and sintered at not less than 1000°C, thereby obtaining graphite particles C3 coated with amorphous carbon having an average particle size of 10.7 $\mu$m.

The tap density, density after pressing, oil absorption amount, degree of circularity and specific surface area of graphite particles C3 are shown in Table 1.

With a scanning electron microscope, it was confirmed that graphite particles C3 did not include particles in which plural flat graphite particles were aggregated or bonded such that principal surfaces of the graphite particles were not parallel to each other.

(Silicon oxide particles 1)

Silicon oxide lumps (Kojundo Chemical Lab. Co., Ltd., 10 mm to 30 mm in size) were roughly pulverized in a mortar, thereby obtaining particles of silicon oxide. The particles were further pulverized with a vibration mill (Nitto Kagaku Co., Ltd., NB-0) and classified with a 300-mesh test sieve, thereby obtaining particles of silicon oxide having an average particle size of 10 $\mu$m.

The obtained particles of silicon oxide (96 parts by mass) and tar pitch (fixed carbon: 50% by mass) (4 parts by mass) were mixed with a rocking mixer (Aichi Electric Co., Ltd., RM-10G) for 5 minutes, and were charged in an aluminum container and subjected to a thermal treatment at 1000°C for 5 hours in a nitrogen atmosphere. Then, the particles were pulverized in a mortar and classified with a 300-mesh test sieve, thereby obtaining silicon oxide particles 1 having an average particle size of 10.8 $\mu$m. The tap density and the specific surface area of silicon oxide particles 1 are shown in Table 1.

(Silicon oxide particles 2)

Silicon oxide lumps (Kojundo Chemical Lab. Co., Ltd., 10 mm to 30 mm in size) were roughly pulverized in a mortar, thereby obtaining particles of silicon oxide. The particles were further pulverized with a vibration mill (Nitto Kagaku Co., Ltd., NB-0) and classified with a 300-mesh test sieve, thereby obtaining particles of silicon oxide having an average particle size of 5 $\mu$m.

The obtained particles of silicon oxide (96 parts by mass) and tar pitch (fixed carbon: 50% by mass) (4 parts by mass) were mixed with a rocking mixer (Aichi Electric Co., Ltd., RM-10G) for 5 minutes, and were charged in an aluminum container and subjected to a thermal treatment at 1000°C for 5 hours in a nitrogen atmosphere. Then, the particles were pulverized in a mortar and classified with a 300-mesh test sieve, thereby obtaining silicon oxide particles 2 having an average particle size of 6.2 $\mu$m. The tap density and the specific surface area of silicon oxide particles 2 are shown in Table 1.

(Silicon oxide particles 3)

Flaky graphite particles having an average particle size of 3 $\mu$m (KS-6, Timcal) and acetylene black (HS-100, Denka Company Limited) were used as conductive particles.

A dispersion of the conductive particles (solid content: 25% by mass) was prepared by adding, to 800 g of water, 156 g of the flaky graphite particles, 40 g of acetylene black and 4 g of carboxymethyl cellulose, and dispersing and mixing the same with a bead mill. Then, 100 g of the dispersion of the conductive particles were added to 450 g of water, stirred with a stirrer, and 500 g of silicon oxide particles 2 were added and further stirred.

The obtained solution, in which silicon oxide particles 2 and conductive particles were dispersed, was dried at 150 °C for 12 hours in a drier. Thereafter, the remainder was pulverized in a mortar and classified with a 300-mesh test sieve, thereby obtaining particles having an average particle size of 5.7 $\mu$m (intermediary particles).

To 1 liter of pure water, 0.7 g of pullulan as an organic substance were dissolved, and 100 g of the intermediary particles were added and dispersed with a homogenizer for 10 minutes. Thereafter, 0.1 g of trehalose were added, dried at 150°C for 12 hours in a thermostat chamber, thereby obtaining silicon oxide particles 3 attached with an organic substance. The average particle size of silicon oxide particles 3 was 5.8 $\mu$m.

(Silicon oxide particles 4)

Silicon oxide lumps (Kojundo Chemical Lab. Co., Ltd., 10 mm to 30 mm in size) were roughly pulverized in a mortar, thereby obtaining particles of silicon oxide. The particles were further pulverized with a vibration mill (Nitto Kagaku Co., Ltd., NB-0) and classified with a 300-mesh test sieve, thereby obtaining particles of silicon oxide having an average particle size of 0.7 $\mu$m.

The obtained particles of silicon oxide (96 parts by mass) and tar pitch (fixed carbon: 50% by mass) (4 parts by mass) were mixed with a rocking mixer (Aichi Electric Co., Ltd., RM-10G) for 5 minutes, and were charged in an aluminum container and subjected to a thermal treatment at 1000°C for 5 hours in a nitrogen atmosphere. Then, the particles were pulverized in a mortar and classified with a 300-mesh test sieve, thereby obtaining silicon oxide particles having an average particle size of 0.8 $\mu$m (intermediary particles).

To 1 liter of pure water, 0.7 g of pullulan as an organic substance were dissolved, and 100 g of the intermediary particles were added and dispersed with a homogenizer for 10 minutes. Thereafter, 0.1 g of trehalose were added, dried at 150°C for 12 hours in a thermostat chamber, thereby obtaining silicon oxide particles 4 attached with an organic substance. The average particle size of silicon oxide particles 4 was 0.8 $\mu$m.

(Flat graphite particles 1)

Flat graphite particles having an average particle size of 3.3 $\mu$m (KS-6, Timcal) were used as flat graphite particles 1.

The tap density, density after pressing, oil absorption amount, degree of circularity and specific surface area of flat graphite particles 1 are shown in Table 1. Further, the XRD peak intensity ratio, R value and oxidation weight reduction rate are shown in Table 1.

(Flat graphite particles 2)

Flat graphite particles having an average particle size of 8.1 $\mu$m (KS-6, Timcal) were used as flat graphite particles 2.

The tap density, density after pressing, oil absorption amount, degree of circularity and specific surface area of flat graphite particles 2 are shown in Table 1. Further, the XRD peak intensity ratio, R value and oxidation weight reduction rate are shown in Table 1.

<Example 1>

(Preparation of negative electrode material)

A negative electrode material of Example 1 was prepared by mixing graphite particles 1 (95 parts by mass) and silicon oxide particles 1 (5 parts by mass). The specific surface area and the tap density of the negative electrode material are shown in Table 2. The measurement of the specific surface area and the tap density was performed by the methods as described above.

(Preparation of negative electrode)

A uniform slurry was prepared by mixing the negative electrode material prepared above (97.6 parts by mass), carboxymethyl cellulose (CMC) (1.2 parts by mass) and styrene-butadiene rubber (SBR) (1.2 parts by mass). The slurry was applied onto a glossy surface of an electrolyte copper foil to form a layer at an amount of 10 g/cm$^2$, and subjected to preliminary drying at 90°C for 2 hours. Then, the layer was pressed with a roll so as to adjust the density to 1.65 g/cm$^3$. Thereafter, the layer was cured by drying in vacuum at 120°C for 4 hours, thereby obtaining a negative electrode.

(Preparation of lithium ion secondary battery)

A 2016-type coin cell was prepared using the negative electrode as prepared above, metallic lithium as a counter electrode, a mixed solution of ethylene carbonate/ethyl methyl carbonate (3:7 by volume) and vinylene carbonate (VC) (1.0% by mass) containing 1M of LiPF$_6$ as an electrolyte, a polyethylene porous film with 25 $\mu$m in thickness as a separator, and a copper sheet with 250 $\mu$m in thickness as a spacer.

(Evaluation of battery characteristics)

In a thermostat chamber kept at 25°C, the cell was charged with a constant current of 0.45 mA/cm$^2$ to 0V, and further charged at a constant voltage of 0V until the current was damped to a value equivalent to 0.09 mA/cm$^2$, and the initial charge capacity (mAh/g) was measured.

After the charging and 30 minutes of an interval, the cell was discharged at 0.45 mA/cm$^2$ to 1.5V, and the initial discharge capacity (mAh/g) was measured. The measured capacity was converted to a value per mass of the negative electrode material.

Five cycles of the charge and the discharge under the aforementioned conditions were performed, and the cell in a charged state was disassembled and the thickness of the negative electrode was measured. The ratio of the thickness of the negative electrode with respect to the thickness of the negative electrode measured at the time of preparation was regarded as the expansion rate (%) of the negative electrode.

Ten cycles of the charge and the discharge under the aforementioned conditions were performed, and the capacity maintenance ratio (%) was calculated by the following formula as an indicator for the cycle characteristics.

Capacity maintenance ratio (%) = (discharge capacity at 10th cycle / discharge capacity at 1st cycle) $\times$ 100

<Example 2>

(Preparation of negative electrode material)

A negative electrode material of Example 2 was prepared by mixing graphite particles 2 (95 parts by mass) and silicon oxide particles 1 (5 parts by mass). The specific surface area and the tap density of the negative electrode material are shown in Table 2.

(Preparation and evaluation of negative electrode and lithium ion secondary battery)

A negative electrode and a lithium ion secondary battery were prepared and evaluated in a similar manner to Example 1, using the negative electrode material obtained in Example 2. The results are shown in Table 2.

<Example 3>

(Preparation of negative electrode material)

A negative electrode material of Example 3 was prepared by mixing graphite particles 3 (90 parts by mass) and silicon oxide particles 2 (10 parts by mass). The specific surface area and the tap density of the negative electrode material are shown in Table 2.

(Preparation and evaluation of negative electrode and lithium ion secondary battery)

A negative electrode and a lithium ion secondary battery were prepared and evaluated in a similar manner to Example 1, using the negative electrode material obtained in Example 3. The results are shown in Table 2.

<Example 4>

(Preparation of negative electrode material)

A negative electrode material of Example 4 was prepared by mixing graphite particles 4 (85 parts by mass) and silicon oxide particles 3 (15 parts by mass). The specific surface area and the tap density of the negative electrode material are shown in Table 2.

(Preparation and evaluation of negative electrode and lithium ion secondary battery)

A negative electrode and a lithium ion secondary battery were prepared and evaluated in a similar manner to Example 1, using the negative electrode material obtained in Example 4. The results are shown in Table 2.

<Example 5, not belonging to the present invention>

(Preparation of negative electrode material)

A negative electrode material of Example 5 was prepared by mixing graphite particles 5 (95 parts by mass) and silicon oxide particles 4 (5 parts by mass). The specific surface area and the tap density of the negative electrode material are shown in Table 2.

(Preparation and evaluation of negative electrode and lithium ion secondary battery)

A negative electrode and a lithium ion secondary battery were prepared and evaluated in a similar manner to Example 1, using the negative electrode material obtained in Example 5. The results are shown in Table 2.

<Example 6>

(Preparation of negative electrode material)

A negative electrode material of Example 6 was prepared by mixing graphite particles 6 (95 parts by mass) and silicon oxide particles 3 (5 parts by mass). The specific surface area and the tap density of the negative electrode material are shown in Table 2.

(Preparation and evaluation of negative electrode and lithium ion secondary battery)

A negative electrode and a lithium ion secondary battery were prepared and evaluated in a similar manner to Example 1, using the negative electrode material obtained in Example 6. The results are shown in Table 2.

<Example 7>

(Preparation of negative electrode material)

A negative electrode material of Example 7 was prepared by mixing graphite particles 7 (95 parts by mass) and silicon oxide particles 1 (5 parts by mass). The specific surface area and the tap density of the negative electrode material are shown in Table 2.

(Preparation and evaluation of negative electrode and lithium ion secondary battery)

A negative electrode and a lithium ion secondary battery were prepared and evaluated in a similar manner to Example 1, using the negative electrode material obtained in Example 7. The results are shown in Table 2.

<Example 8>

(Preparation of negative electrode material)

A negative electrode material of Example 8 was prepared by mixing graphite particles 8 (95 parts by mass) and silicon oxide particles 1 (5 parts by mass). The specific surface area and the tap density of the negative electrode material are shown in Table 2.

(Preparation and evaluation of negative electrode and lithium ion secondary battery)

A negative electrode and a lithium ion secondary battery were prepared and evaluated in a similar manner to Example 1, using the negative electrode material obtained in Example 8. The results are shown in Table 2.

<Example 9>

(Preparation of negative electrode material)

A negative electrode material of Example 9 was prepared by mixing graphite particles 9 (70 parts by mass), silicon oxide particles 3 (5 parts by mass) and flat graphite particles having an average particle size of 3 $\mu$m (KS-6,

Timcal) (25 parts by mass). The specific surface area and the tap density of the negative electrode material are shown in Table 2.

(Preparation and evaluation of negative electrode and lithium ion secondary battery)

A negative electrode and a lithium ion secondary battery were prepared and evaluated in a similar manner to Example 1, using the negative electrode material obtained in Example 9. The results are shown in Table 2.

<Example 10>

(Preparation of negative electrode material)

A negative electrode material of Example 10 was prepared by mixing graphite particles 2 (85 parts by mass), silicon oxide particles 1 (5 parts by mass) and flat graphite particles having an average particle size of 8 μm (10 parts by mass). The specific surface area and the tap density of the negative electrode material are shown in Table 2.

(Preparation and evaluation of negative electrode and lithium ion secondary battery)

A negative electrode and a lithium ion secondary battery were prepared and evaluated in a similar manner to Example 1, using the negative electrode material obtained in Example 10. The results are shown in Table 2.

<Comparative Example 1>

(Preparation of negative electrode material)

A negative electrode material of Comparative Example 1 was prepared by mixing graphite particles C1 (95 parts by mass) and silicon oxide particles 1 (5 parts by mass). The specific surface area and the tap density of the negative electrode material are shown in Table 2.

(Preparation and evaluation of negative electrode and lithium ion secondary battery)

A negative electrode and a lithium ion secondary battery were prepared and evaluated in a similar manner to Example 1, using the negative electrode material obtained in Comparative Example 1. The results are shown in Table 2.

<Comparative Example 2>

(Preparation of negative electrode material)

A negative electrode material of Comparative Example 2 was prepared by mixing graphite particles C2 (95 parts by mass) and silicon oxide particles 3 (5 parts by mass). The specific surface area and the tap density of the negative electrode material are shown in Table 2.

(Preparation and evaluation of negative electrode and lithium ion secondary battery)

A negative electrode and a lithium ion secondary battery were prepared and evaluated in a similar manner to Example 1, using the negative electrode material obtained in Comparative Example 2. The results are shown in Table 2.

<Comparative Example 3>

(Preparation of negative electrode material)

A negative electrode material of Comparative Example 3 was prepared by mixing graphite particles C3 (90 parts by mass) and silicon oxide particles 3 (10 parts by mass). The specific surface area and the tap density of the negative electrode material are shown in Table 2.

(Preparation and evaluation of negative electrode and lithium ion secondary battery)

A negative electrode and a lithium ion secondary battery were prepared and evaluated in a similar manner to Example 1, using the negative electrode material obtained in Comparative Example 3. The results are shown in Table 2.

<Comparative Example 4>

(Preparation of negative electrode material)

Particles in which graphite particles and silicon oxide particles were compounded via a carbonized product of an organic substance were prepared using graphite particles C2 (90 parts by mass) and silicon oxide particles 2 (10 parts by mass) as a negative electrode material of Comparative Example 4. The specific surface area and the tap density of the negative electrode material are shown in Table 2.

The compounding of graphite particles and silicon oxide particles was performed by sintering a mixture of spherical graphite particles used for the preparation of graphite particles C2 (82.8 parts by mass), tar pitch (7.6 parts by mass) and silicon oxide particles 2 (9.6 parts by mass) at 1000°C and pulverizing the same.

(Preparation and evaluation of negative electrode and lithium ion secondary battery)

A negative electrode and a lithium ion secondary battery were prepared and evaluated in a similar manner to Example 1, using the negative electrode material obtained in Comparative Example 4. The results are shown in Table 2.

<Comparative Example 5>

(Preparation of negative electrode material)

Particles in which graphite particles and silicon oxide particles were compounded via a carbonized product of an organic substance were prepared using graphite particles 3 (86.4 parts by mass), tar pitch (4 parts by mass) and silicon oxide particles 2 (9.6 parts by mass), in a similar manner to Comparative Example 4, as a negative electrode material of Comparative Example 5. The specific surface area and the tap density of the negative electrode material are shown in Table 2.

(Preparation and evaluation of negative electrode and lithium ion secondary battery)

A negative electrode and a lithium ion secondary battery were prepared and evaluated in a similar manner to Example 1, using the negative electrode material obtained in Comparative Example 5. The results are shown in Table 2.

Table 1

| Graphite particles | 1 | 2 | 3 | 4 | 5 | 6 | 7 | 8 | 9 | C1 | C2 | C3 |
|---|---|---|---|---|---|---|---|---|---|---|---|---|
| Average particle size [μm] | 20.0 | 23.0 | 18.0 | 10.0 | 20.0 | 15.0 | 22.8 | 18.5 | 17.8 | 22.0 | 16.0 | 10.7 |
| Tap density [g/cm³] | 0.82 | 0.92 | 0.79 | 0.72 | 0.90 | 0.95 | 1.00 | 0.92 | 1.06 | 1.02 | 1.15 | 0.97 |
| Density after pressing [g/cm³] | 1.98 | 1.92 | 1.88 | 1.78 | 1.73 | 1.72 | 1.90 | 1.55 | 1.50 | 1.70 | 1.65 | 1.55 |
| Oil absorption amount [ml/100g] | 63 | 62 | 77 | 92 | 65 | 55 | 58 | 70 | 52 | 50 | 48 | 55 |
| Degree of circularity [-] | 0.86~0.89 | 0.88~0.91 | 0.89~0.92 | 0.90~0.93 | 0.86~0.89 | 0.90~0.92 | 0.92~0.94 | 0.89~0.92 | 0.92~0.94 | 0.93~0.95 | 0.93~0.95 | 0.90~0.93 |
| Specific surface area [m²/g] | 3.5 | 3.5 | 5.0 | 7.2 | 4.2 | 5.5 | 4.0 | 2.8 | 2.8 | 5.5 | 3.2 | 4.0 |

| Silicon oxide particles | 1 | 2 | 3 | 4 |
|---|---|---|---|---|
| Average particle size [$\mu$m] | 10.8 | 6.2 | 5.8 | 0.8 |
| Tap density [g/cm$^3$] | 1.15 | 0.96 | 0.80 | 0.80 |
| Specific surface area [m$^2$/g] | 1.0 | 2.3 | 2.3 | 10.0 |

| Flat graphite particles | 1 | 2 |
|---|---|---|
| Average particle size [$\mu$m] | 3.3 | 8.1 |
| Tap density [g/cm$^3$] | 0.3 | 0.5 |
| Density after pressing [g/cm$^3$] | 1.87 | 1.92 |
| Oil absorption amount [ml/100g] | 117 | 92 |
| Specific surface area [m$^2$/g] | 15.0 | 9.0 |
| XRD Peak intensity ratio [-] (101)3R/(101)2H | 0.65 | 0.41 |
| R value | 0.1 | 0.06 |
| Oxidation weight reduction rate [wt%] | 24 | 3 |

Table 2

| | Examples | | | | | | | | | | Comparative Examples | | | | |
|---|---|---|---|---|---|---|---|---|---|---|---|---|---|---|---|
| | 1 | 2 | 3 | 4 | 5 | 6 | 7 | 8 | 9 | 10 | 1 | 2 | 3 | 4 | 5 |
| Mixed / Compounded | Mixed | Mixed | Mixed | Mixed | Mixed | Mixed | Mixed | Mixed | Mixed | Mixed | Mixed | Mixed | Mixed | Compounded | Compounded |
| Graphite particles | 1 | 2 | 3 | 4 | 5 | 6 | 7 | 8 | 9 | 2 | C1 | C2 | C3 | C2 | 3 |
| Silicon oxide particles | 1 | 1 | 2 | 3 | 4 | 3 | 1 | 1 | 3 | 1 | 1 | 3 | 3 | 2 | 2 |
| Ratio of particle size Graphite / Silicon oxide | 1.85 | 2.13 | 2.90 | 1.72 | 25.00 | 2.59 | 2.11 | 2.98 | 1.65 | 2.13 | 2.04 | 2.76 | 1.84 | 2.58 | 2.90 |
| Specific surface area [m$^2$/g] | 3.5 | 3.5 | 5.2 | 7.4 | 4.7 | 5.6 | 4.0 | 2.9 | 7.1 | 4.3 | 5.5 | 3.4 | 4.2 | 2.8 | 3.4 |
| Density after pressing [g/cm$^3$] | 1.95 | 1.89 | 1.86 | 1.76 | 1.71 | 1.70 | 1.88 | 1.53 | 1.55 | 1.87 | 1.67 | 1.62 | 1.52 | 1.60 | 1.50 |
| Oil absorption amount [ml/100g] | 61 | 60 | 77 | 92 | 64 | 62 | 58 | 70 | 63 | 66 | 48 | 46 | 53 | 46 | 73 |
| Tap density [g/cm$^3$] | 0.83 | 0.93 | 0.80 | 0.72 | 0.89 | 0.94 | 1.01 | 0.93 | 0.91 | 0.88 | 1.03 | 1.14 | 0.93 | 0.91 | 0.84 |
| Initial charge capacity [mAh/g] | 410 | 412 | 452 | 487 | 402 | 404 | 413 | 410 | 403 | 418 | 395 | 399 | 425 | 428 | 437 |
| Rate of expansion [%] | 127 | 123 | 129 | 137 | 128 | 129 | 126 | 130 | 133 | 128 | 136 | 134 | 144 | 148 | 140 |
| Capacity maintenancerate [%] | 92.6 | 92.9 | 89.8 | 87.1 | 93.9 | 91.7 | 93.0 | 92.8 | 89.5 | 93.5 | 76.1 | 79.1 | 81.6 | 74.6 | 87.8 |

26

As shown in Table 2, in the Examples in which the negative electrode material includes flat graphite particles and silicon oxide particles, expansion of the negative electrode upon charging is suppressed as compared with Comparative Examples 1-3 in which the negative electrode material does not include flat graphite particles. Further, the Examples exhibit superior cycle characteristics (capacity maintenance ratio), while the initial charge capacity is at the same level with the Comparative Examples.

In the Examples in which the negative electrode material is obtained by mixing graphite particles and silicon particles, expansion of the negative electrode upon charging is suppressed as compared with Comparative Examples 4 and 5, in which the negative electrode is obtained by compounding graphite particles and silicon oxide particles. Further, the Examples exhibit superior cycle characteristics (capacity maintenance ratio), while the initial charge capacity is at the same level with the Comparative Examples.

Reference of symbols

20A: second particle, 20B: second particle, 20C: second particle, 20D: second particle, 20E: second particle, 21: silicon oxide particle, 22: carbon

**Claims**

1.   A negative electrode material for a lithium ion secondary battery, which is a mixture of first particles, comprising plural flat graphite particles being aggregated or bonded such that principal surfaces of the graphite particles are not parallel to each other, and second particles including silicon oxide, wherein a ratio of an average particle size of the first particles with respect to an average particle size of the second particles (average particle size of first particles / average particle size of second particles) is from 1.0 to 10.0, the average particle size being a particle size at which an accumulation from a side of smaller particle size in a volume-based particle distribution obtained by a laser diffraction particle size distribution measurement apparatus is 50% (D50),
wherein the first particles and the second particles are not aggregated or bonded to each other via a carbonized product of an organic substance.

2.   The negative electrode material for a lithium ion secondary battery according to claim 1, having an oil absorption amount of 50 ml/100 g or more measured as described in the description.

3.   The negative electrode material for a lithium ion secondary battery according to claim 1 or claim 2, having a degree of circularity, measured with a flow-type particle analyzer as described in the description, of from 0.83 to 0.95.

4.   The negative electrode material for a lithium ion secondary battery according to any one of claim 1 to claim 3, having a tap density of from 0.70 g/cm$^3$ to 1.30 g/cm$^3$ measured as described in the description.

5.   The negative electrode material for a lithium ion secondary battery according to any one of claim 1 to claim 4, having a BET specific surface area based on nitrogen gas adsorption of from 1.5 m$^2$/g to 8.0 m$^2$/g.

6.   The negative electrode material for a lithium ion secondary battery according to any one of claim 1 to claim 5, having a BET specific surface area based on nitrogen gas adsorption of from 2.0 m$^2$/g to 7.0 m$^2$/g.

7.   A method for producing the negative electrode material for a lithium ion secondary battery according to any one of claim 1 to claim 6, the method comprising a process of mixing the first particles, in which plural flat graphite particles are aggregated or bonded such that principal surfaces of the graphite particles are not parallel to each other, with the second particles including silicon oxide.

8.   A negative electrode material slurry for a lithium ion secondary battery, comprising the negative electrode material for a lithium ion secondary battery according to any one of claim 1 to claim 6, a binder, and a solvent.

9.   A negative electrode for a lithium ion secondary battery, comprising a current collector and a negative electrode layer including the negative electrode material for a lithium ion secondary battery according to any one of claim 1 to claim 6.

10.  A lithium ion secondary battery, comprising a positive electrode, an electrolyte, and the negative electrode according to claim 9.

**EP 3 780 184 B1**

**Patentansprüche**

1. Negativelektrodenmaterial für eine Lithiumionen-Sekundärbatterie, welches ein Gemisch von ersten Teichen, umfassend mehrere flache Graphitteilchen, derart aggregiert oder gebunden, dass Hauptoberflächen der Graphitteilchen nicht zueinander parallel sind, und zweiten Teilchen, einschließend Siliciumoxid, ist, wobei ein Verhältnis einer mittleren Teilchengröße der ersten Teilchen in Bezug auf eine mittlere Teilchengröße der zweiten Teilchen (mittlere Teilchengröße der ersten Teilchen/mittlere Teilchengröße der zweiten Teilchen) 1,0 bis 10,0 beträgt, wobei die mittlere Teilchengröße eine Teilchengröße ist, bei der eine Akkumulation von einer Seite einer kleineren Teilchengröße in einer volumenbasierten Teilchen-Verteilung, erhalten mittels einer Laserdiffraktions-Teilchengrößenverteilungs-Messvorrichtung, 50 % (D50) beträgt,
wobei die ersten Teilchen und die zweiten Teilchen miteinander nicht durch ein carbonisiertes Produkt einer organischen Substanz aggregiert oder gebunden sind.

2. Negativelektrodenmaterial für eine Lithiumionen-Sekundärbatterie nach Anspruch 1 mit einer Öl-Absorptionsmenge von 50 ml/100 g oder mehr, gemessen wie in der Beschreibung beschrieben.

3. Negativelektrodenmaterial für eine Lithiumionen-Sekundärbatterie nach Anspruch 1 oder Anspruch 2 mit einem Rundheitsgrad, gemessen mit einer Teilchenanalysevorrichtung des Fluss-Typs wie in der Beschreibung beschrieben, von 0,83 bis 0,95.

4. Negativelektrodenmaterial für eine Lithiumionen-Sekundärbatterie nach einem der Ansprüche 1 bis 3 mit einer Klopfdichte von 0,70 g/cm$^3$ bis 1,30 g/cm$^3$, gemessen wie in der Beschreibung beschrieben.

5. Negativelektrodenmaterial für eine Lithiumionen-Sekundärbatterie nach einem der Ansprüche 1 bis 4 mit einer BET-spezifischen Oberfläche auf Grundlage von Stickstoffgas-Adsorption, von 1,5 m$^2$/g bis 8,0 m$^2$/g.

6. Negativelektrodenmaterial für eine Lithiumionen-Sekundärbatterie nach einem der Ansprüche 1 bis 5 mit einer BET-spezifischen Oberfläche, auf Grundlage von Stickstoffgas-Adsorption, von 2,0 m$^2$/g bis 7,0 m$^2$/g.

7. Verfahren zum Herstellen des Negativelektrodenmaterials für eine Lithiumionen-Sekundärbatterie nach einem der Ansprüche 1 bis 6, das Verfahren umfassend einen Prozess des Mischens der ersten Teilchen, worin plurale flache Graphitteilchen derart aggregiert oder gebunden werden, dass Hauptoberflächen der Graphitteilchen nicht zueinander parallel sind, wobei die zweiten Teilchen Siliciumoxid einschließen.

8. Negativelektrodenmaterial-Aufschlämmung für eine Lithiumionen-Sekundärbatterie, umfassend das Negativelektrodenmaterial für eine Lithiumionen-Sekundärbatterie nach einem der Ansprüche 1 bis 6, ein Bindemittel und ein Lösemittel.

9. Negativelektrode für eine Lithiumionen-Sekundärbatterie, umfassend einen Stromabnehmer und eine Negativelektrodenschicht, welche das Negativelektrodenmaterial für eine Lithiumionen-Sekundärbatterie nach einem der Ansprüche 1 bis 6 einschließt.

10. Lithiumionen-Sekundärbatterie, umfassend eine Positivelektrode, einen Elektrolyten und die Negativelektrode nach Anspruch 9.

**Revendications**

1. Matériau d'électrode négative pour une batterie secondaire au lithium-ion, qui est un mélange de premières particules, comprenant plusieurs particules de graphite plates étant agrégées ou liées de sorte que des surfaces principales des particules de graphite ne sont pas parallèles les unes aux autres, et de secondes particules comportant de l'oxyde de silicium, dans lequel un rapport entre la taille de particule moyenne des premières particules et la taille de particule moyenne des secondes particules (taille de particule moyenne des premières particules/taille de particule moyenne des secondes particules) est compris entre 1,0 et 10,0, la taille de particule moyenne étant une taille de particule à laquelle une accumulation d'un côté de taille de particule plus petite dans une distribution de particules basée sur le volume obtenue par un appareil de mesure de distribution de taille de particule par diffraction laser est de 50 % (D50),
dans lequel les premières particules et les secondes particules ne sont pas agrégées ou liées les unes aux autres via un produit carbonisé d'une substance organique.

2. Matériau d'électrode négative pour une batterie secondaire au lithium-ion selon la revendication 1, présentant une quantité d'absorption d'huile de 50 ml/100 g ou plus mesurée comme décrit dans la description.

3. Matériau d'électrode négative pour une batterie secondaire au lithium-ion selon la revendication 1 ou la revendication 2, présentant un degré de circularité, mesuré avec un analyseur de particules du type à écoulement comme décrit dans la description, de 0,83 à 0,95.

4. Matériau d'électrode négative pour une batterie secondaire au lithium-ion selon l'une quelconque de la revendication 1 à la revendication 3, présentant une densité après tassement de 0,70 g/cm$^3$ à 1,30 g/cm$^3$ mesurée comme décrit dans la description.

5. Matériau d'électrode négative pour une batterie secondaire au lithium-ion selon l'une quelconque de la revendication 1 à la revendication 4, présentant une surface spécifique BET basée sur l'adsorption d'azote gazeux de 1,5 m$^2$/g à 8,0 m$^2$/g.

6. Matériau d'électrode négative pour une batterie secondaire au lithium-ion selon l'une quelconque de la revendication 1 à la revendication 5, présentant une surface spécifique BET basée sur l'adsorption d'azote gazeux de 2,0 m$^2$/g à 7,0 m$^2$/g.

7. Procédé de production du matériau d'électrode négative pour une batterie secondaire au lithium-ion selon l'une quelconque de la revendication 1 à la revendication 6, le procédé comprenant un processus de mélange des premières particules, dans lequel plusieurs particules de graphite plates sont agrégées ou liées de sorte que des surfaces principales des particules de graphite ne sont pas parallèles les unes aux autres, les secondes particules comportant de l'oxyde de silicium.

8. Suspension de matériau d'électrode négative pour une batterie secondaire au lithium-ion, comprenant le matériau d'électrode négative pour une batterie secondaire au lithium-ion selon l'une quelconque de la revendication 1 à la revendication 6, un liant et un solvant.

9. Électrode négative pour une batterie secondaire au lithium-ion, comprenant un collecteur de courant et une couche d'électrode négative comportant le matériau d'électrode négative pour une batterie secondaire au lithium-ion selon l'une quelconque de la revendication 1 à la revendication 6.

10. Batterie secondaire au lithium-ion, comprenant une électrode positive, un électrolyte et l'électrode négative selon la revendication 9.

# FIG. 1A

Press

Graphite specimen

Press molding

# FIG. 2

22

21 } 20A

FIG. 3

FIG. 4

## FIG. 5

## FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015165510 A
- WO 2017002959 A1
- WO 2012077785 A